Europäisches Patentamt

European Patent Office

Office européen des brevets

(19)

(11)  **EP 1 135 820 B1**

(12)  # EUROPEAN PATENT SPECIFICATION

(45) Date of publication and mention
     of the grant of the patent:
     **31.07.2002  Bulletin 2002/31**

(21) Application number: **99955842.2**

(22) Date of filing: **17.11.1999**

(51) Int Cl.⁷: $H01M\ 4/86$, $H01M\ 8/12$

(86) International application number:
     **PCT/DK99/00631**

(87) International publication number:
     **WO 00/30194 (25.05.2000 Gazette 2000/21)**

(54) **ELECTROCHEMICAL CELL**

ELEKTROCHEMISCHE ZELLE

PILE ELECTROCHIMIQUE

(84) Designated Contracting States:
     **AT BE CH CY DE DK ES FI FR GB GR IE IT LI LU
     MC NL PT SE**

(30) Priority: **17.11.1998  DK 149798**

(43) Date of publication of application:
     **26.09.2001  Bulletin 2001/39**

(73) Proprietor: **FORSKNINGSCENTER RISO
     4000 Roskilde (DK)**

(72) Inventors:
     • **Primdahl, Soeren
       3400 Alleroed (DK)**
     • **Bagger, Carsten
       4000 Roskilde (DK)**

     • **JORGENSEN, Mette, Juhl
       DK-4000 Roskilde (DK)**
     • **MOGENSEN, Mogens
       DK-3540 Lynge (DK)**
     • **Marina, Olga
       2720 Vanloese (DK)**

(74) Representative: **Siiger, Joergen et al
     Chas. Hude A/S,
     H.C. Andersens Boulevard 33
     1780 Copenhagen V (DK)**

(56) References cited:
     **US-A- 3 496 021**

     • **PATENT ABSTRACTS OF JAPAN & JP 05 190
       183 A (NGK INSULATORS LTD) 09 November
       1993**

**Description**

<u>Technical Field</u>

The invention relates to an electrochemical cell, such as an SOFC cell, comprising a nickel based electrode structure, such as in form of an Ni/YSZ anode, to which Mn has been added.

<u>Background Art</u>

From JP 5-190183 it is known to add Mn to the Ni/YSZ anode in an amount of 5 to 50 metal atom% of the anode material. As a result the reaction resistance $R_p$ of the anode is reduced.

<u>Brief Description of the Invention.</u>

The object of the present invention is to show how the reaction resistance $R_p$ can be further reduced as well as how further advantages in form of an increased conductivity and a limited catalytic activity can be obtained.
An electrochemical cell of the above type is according to the invention characterized in that the added amount of Mn to the zone of the electrode extending less than 20 μm from the electrolyte represents 0.5 to 5 metal atom%, preferably 1 to 4 metal atom%, especially 2 to 3 metal atom%.
An electrochemical cell can be produced by applying electrodes onto a carrier electrolyte or electrolyte on a carrier electrode. The cell can be produced by intermediate sinterings or be sintered when more or all the components are assembled.
An electrochemical cell can be used within several fields, said cell comprising an electrolyte, which is also called a membrane, in contact with two electrodes of a predetermined composition where at least one electrode is subjected to a gas mixture which has a reducing effect compared to air. Below four examples are presented of how the electrochemical, electric and catalytic properties of such a nickel based electrode are of vital importance for the efficiency of the cell.

i) a solid oxide fuel cell (SOFC) is a catalytic cell mainly comprising an electrolyte with an anode and a cathode on opposed sides. A nickel electrolyte composite is widely used as the anode. The electrolyte is most frequently a Y-doped $ZrO_2$ (YSZ). The anode is most frequently produced by way of sintering in air, the reason why NiO is used. During operation the NiO is reduced to Ni in the reducing anode gas. The fuel cell can be supplied with a gas, such as hydrogen or methane, and produce current or be driven by means of the current and dissociate for instance water or carbon dioxide.

ii) An electrochemical reactor can be used for a chemical synthesis by way of a complete or partial oxidation of a compound, such as for instance methane, ethane or methanol. The reactor can be based on electrochemical cells with two electrodes, where at least one electrode, viz. the active electrode, catalyzes the oxidation. This electrode is typically nickel based.

iii) An oxygen separation membrane can be used for the production of for instance synthesis gas by way of a partial oxidation of for instance methane. This membrane can be a dense electrolyte as stated above or an electrolyte which has been provided with an electronic conductivity, viz. be internally short-circuited, and on which a nickel based electrolyte catalyzes the oxidation. A reactant, such as for instance oxygen, water or carbon dioxide can be mixed into the reducing gas or oxygen can be supplied in ionic form through the membrane. This process can be electrically driven by transmitting a current through the cell, viz. the compact electrolyte, or the cell can be internally short-circuited, viz. the electrolyte with the electronic conductivity.

iv) As a sensor for measuring the composition of the gas.

In the four examples i)to iv) the nickel based electrode has been subjected to a reducing atmosphere, in which a complete or partial oxidation or reduction of a reactant takes place. The fundamental function of the electrochemical cell is thus to oxidize for instance methane, hydrogen or carbon monoxide while delivering an electric current, or to drive the process in the opposite direction by applying a current and dissociating for instance water into hydrogen and oxygen.
The efficiency of the electrode is typically defined by the following three values: A) the power loss associated with the electrode process, B) the electric conductivity of the electrode, and C) the catalytic activity of the electrode.
Below these properties are discussed in connection with nickel based electrodes or catalytically active components used in a fuel cell, an electrochemical reactor and on an oxygen separation membrane or the like.

<u>Definition of problems</u>

A) An improvement of the efficiency of the electrochemical cell and a reduction of the costs give rise to a demand for reducing the power loss ($W_{TAB} = R_p i^2$) associated with the electrode process and below expressed by the reaction resistance $R_p$ also called the polarization resistance. It turned out that an Ni/YSZ composite electrode with respect to function, but not necessarily to production can be divided into two zones with different primary functions. The electrode is electrochemically active in a range of 10 to 20 $\mu$m from the compactly sintered electrolyte, which means that here the reactants are reacted by way of oxidation reduction while releasing or receiving electrons. This layer is associated with the lowest achievable reaction resistance $R_p$ for the electrode in question.

B) The primary function of the superposed electrode structure is contacting and as electron conductor because the reactants in the active layer are only reacted in so far as electrons can be transmitted to or from the electrode. This conductivity is substantial because a predetermined distance of the magnitude of mm or more can exist in the technical structure of the electrochemical cell between the contact points of the electrode and the structure establishing the electric contact to the cell.

C) As far as an SOFC driven on natural gas or methane is concerned, the endothermal steam reforming reaction should for optimizing reasons be carried out on or adjacent the active cell where heat is generated. The strong catalytic properties of nickel have the effect that the steam reforming reaction on a nickel based electrochemical cell typically occurs over the first few mm of the electrode adjacent the gas inlet, whereby this part of the system is strongly cooled. As a result, thermal gradients arise in the system which in turn involves a risk of breakings. Accordingly there is a demand for a possibility of suppressing the activity of a specific amount of nickel in the electrode with respect to the catalytic reaction of hydrocarbons. This demand applies to the entire electrode structure and primarily to the superposed electrode part which handles the conductivity of the electrode as this part presents the largest nickel surface.

<u>Background Art</u>

A) The composite Ni/YSZ electrode for SOFC has been the object of several optimizing studies with respect to microstructure, particle size relationship, sintering temperature and quantitative ratio of the two materials. Ni/YSZ composite anodes are known with a reaction resistance $R_p$ lower than 0.10 to 0.15 $\Omega$cm$^2$ at 1000°C in hydrogen with approximately 3% water.
An $R_p$ lower than above has been obtained by using ruthenium in stead of nickel, but ruthenium is relatively cost-intensive and difficult to process for the purpose.
In stead of the typical $ZrO_2$ based electrolyte, it is possible to use a mixed conductor based on for instance $PrO_x$, $CeO_2$), whereby the $R_p$ is reduced. Again, the raw materials are relatively expensive.

B) The demand for a high conductivity in the electrode can be met by using an Ni/YSZ composite with a high content of Ni or by sintering the electrode structure at a high temperature in such a manner that the nickel particles are brought into a good contact. However, it is not advantageous to have a too high content of nickel because the thermal coefficient of expansion (TEC) of the electrode is thereby increased. As a result it moves away from the electrolyte both in the oxidized state and in the reduced state. Furthermore, it has been demonstrated that fractures caused by the difference in TEC easily propagate between the electrode and the compactly sintered electrolyte when the sintering temperature is higher than stated above. Finally, the content of Ni should be low in order to minimize the tension in the structure in case the nickel content of the electrode unintendedly oxidizes during operation.

C) No technically suitable method is known for lowering the catalytic properties of nickel apart from a lowering of the nickel content/the nickel surface, which in general has a negative effect on the polarisation resistance $R_p$ of the electrode and the electric conductivity.

Brief Description of the Invention

The above three problems A) to C) can to a considerable degree be solved by adding $MnO_x$ to the nickel based electrode or the nickel based catalytic component. Here and below the expression $MnO_x$ is used for all possible components which can supply the element Mn bearing in mind that under usual operational conditions for such structures nothing but Mn-oxides or a mixed metallic oxide containing Mn exist.

The problems B) and C) are solved by means of the features indicated in claim 2.

Brief Description of the Drawings

The invention is explained in greater detail below with reference to the accompanying drawings, in which

Fig. 1 is a diagrammatic cross sectional view of a symmetrical electrochemical cell comprising an electrolyte and two identical electrodes, each electrode including three electrode layers,

Fig. 2 illustrates the electric connections to the symmetrical cell used for characterizing the polarisation resistance $R_p$ of the electrodes,

Fig. 3 shows test data in form of an impedance spectrum corrected for the area of the electrode. The polarisation resistance $R_p$ of the electrode presents approximately 2/3 of the distance between the axis points of intersections on the abscissa,

Fig. 4 shows an equivalent circuit used for curve adjustment of the test data in Fig. 3, where L is an inductance, $R_s$ a serial resistance in the electrolyte, $R_1$ and $R_2$ together present the polarization resistance $R_p$, whereas $R_D$ is the diffusion resistance in the gas above the electrodes. Q is a constant phase element representing a non-ideal capacitance associated with the indicated resistances,

Fig. 5 is a sectional view through a semi-cell for characterising the inplane conductivity of the electrode, where an upper electrode layer of a predetermined thickness has been superposed an electrolyte with an active electrode layer. The thickness of the active electrode layer is preferably less than $20\mu m$,

Fig. 6 illustrates a contacting so as to characterize the inplane conductivity of an upper electrode layer on the semi-cell of Fig. 5. Platinum wires with insulating aluminium pipes wound thereon are pressed against the electrode surface of a weight load. The platinum wires represent four contacts of a square arrangement, the conductivity of thin layers being measurable between said contacts,

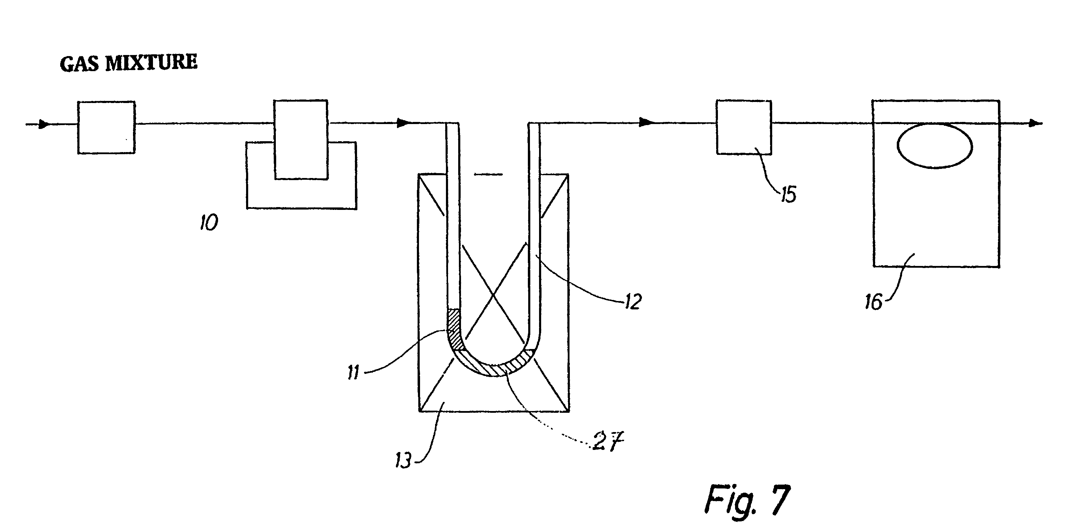

Fig. 7 illustrates an arrangement for measuring the catalytic activity of a powdered electrode layer. A gas mixture is established with mass flow valves and is carried successively through the following elements through pipes: A bobble bottle with water on a thermostatically controlled oil bath, whereby the water content in the gas is increased, a powdered catalyst on a bed of inert material in a heated U-shaped quartz pipe, in which a catalytic reaction occurs, a cold trap, in which the water content in the gas is reduced, and a gas chromatograph, in which the composition of the gas is analysed,

Fig. 8 shows measuring data, viz. the catalytic activity expressed as the reforming speed versus the content of $MnO_x$ expressed as metal atom% of Mn in the electrode layer,

Fig. 9 is a cross sectional view of an electrochemical cell, where an electrolyte has been coated with two cathode layers on one side and two anode layers on the opposite side,

Fig. 10 is a sectional view of an experimental contacting of the cell of Fig. 9. The electrode surfaces of the cell are coated with a non-sintered contact layer on both anode and cathode, said layers ensuring the contact to a woven platinum grid which is applied onto both electrode surfaces,

Fig. 11 is a sectional view of an arrangement in an oven for an electric characterizing of an electrochemical cell. The contacted electrochemical cell of Fig. 10 has been mounted between gas distribution plates with ribs and openings, said gas distribution plates in turn being mounted between two sets of concentric aluminium pipes. Gases are fed to the electrodes through the outer pipes and removed through the inner pipes,

Fig. 12 shows measuring data, viz. area corrected voltage curves for the edge voltage $V_K$ and the central voltage $V_c$, respectively. The DC resistance of the cell is calculated as the negative average inclination over the entire measured interval.

Best Mode for Carrying Out the Invention.

The addition of $MnO_x$ to the active electrode layer, which preferably represents less than 20µm, and the superposed layers 19, 20, which can be of a predetermined thickness, has been documented by way of a number of examples.

The polarization resistance $R_p$ measured at 850°C and 1000°C in hydrogen with 3 % water for an Ni/YSZ cermet anode has been reduced by addition of $MnO_x$ by way of 1) impregnation of a sintered electrode, 2) application onto the electrolyte surface prior to the application and sintering of the electrode, and 3) admixing into the anode slurry prior to application and sintering. At 850°C $R_p$ has been reduced from 105 $m\Omega cm^2$ to 59 $m\Omega cm^2$, and at 1000°C $R_p$ has been reduced from 79 $\Omega cm^2$ to 20 $\Omega cm^2$.

- The electronic conductivity of an Ni/YSZ electrode layer has been increased by addition of $MnO_x$ from 14 to 390 S/cm at 20°C and from 2.5 to 60 S/cm at 1000°C.

- The catalytic activity of an Ni/YSZ cermet electrode layer for steam reformation of methane has been reduced by addition of $MnO_x$ from 0.3 to 0.005 $\mu molmin^{-1}g^{-1}$.

- The polarization resistance $R_p$ of an Ni/YSZ anode on an electrochemical cell has been reduced by addition of $MnO_x$ to the anode from 0.25 $\Omega cm^2$ to maximum 0.08 $\Omega cm^2$ at 850°C.

Below the examples are discussed in detail:

Reduction of $R_P$ for Ni based electrode

The electrodes are applied onto the electrolyte by way of airborne injection of a particle suspension, but other techniques, such as serigraphy and painting are also suitable. The suspension is provided in the solvent ethanole by means of the dispersant polyvinyl butyral, but other solvents and dispersants are also suitable. An electrode comprises one or more layers, and particle suspensions of different compositions can be used for these layers. A suitable particle size distribution and homogeneity are obtained by ball grinding the suspension. After spraying of one or more particle suspensions, the electrode is subjected to a sintering. The electrode can furthermore be admixed additives by way of application of intermediate layers or postimpregnation by means of dissolved salts or suspensions.

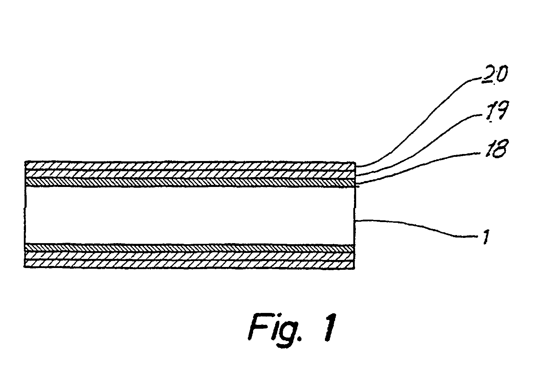

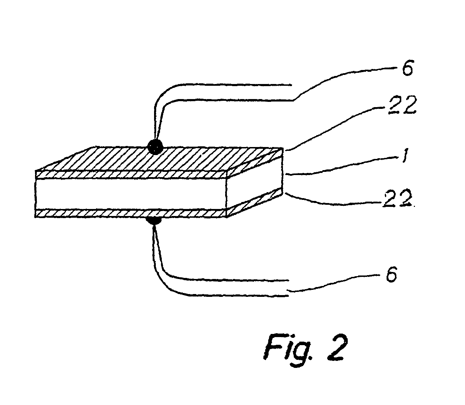

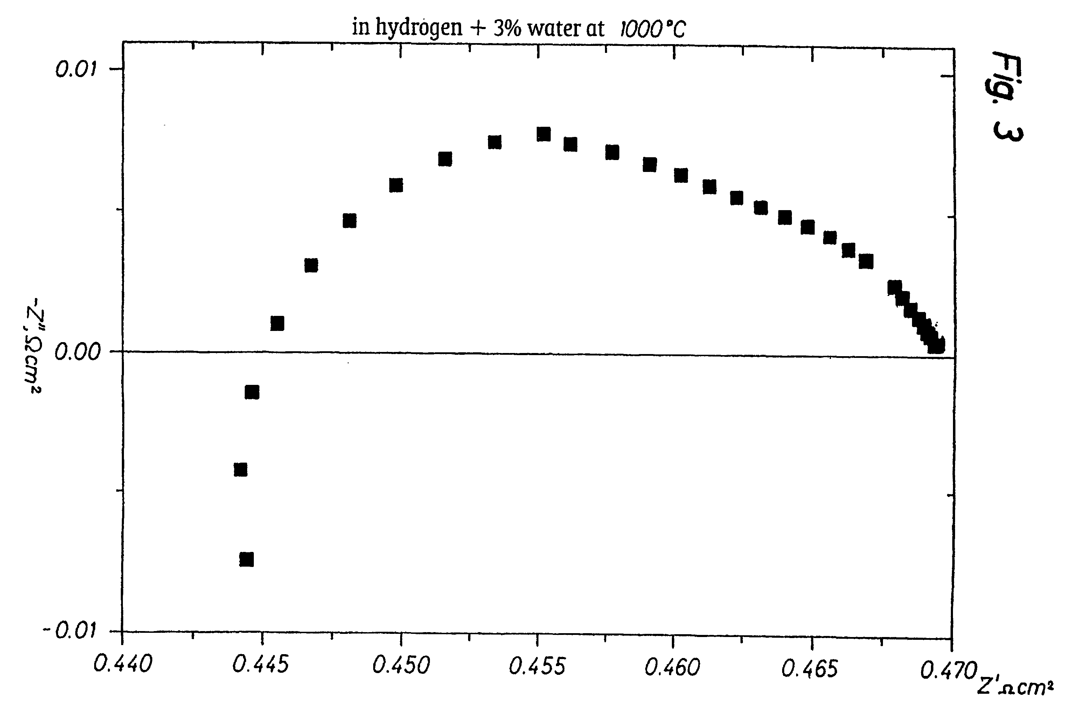

In order to illustrate the effect of adding $MnO_x$ to Ni-based electrodes, a reference electrode without $MnO_x$ and test electrodes with $MnO_x$ have been produced, cf. Table 1A. The electrodes comprising a first, a second and a third electrode layer 18, 19, 20 are applied onto both sides of sintered 8YSZ ($ZrO_2$ doped with 8 mol% $Y_2O_3$) electrolytes 1, cf. Fig. 1. The electrolytes 1 are of a thickness of 160 to 180 µm. A contact face 22 is provided between the electrolyte 1 and the first electrode layer 18. The produced cells are fragmented into almost square elements of an area of approximately 0.1 to 0.2 $cm^2$ and mounted between four platinum wires 6 in such a manner that two elements are provided on the central portion of each electrode surface, cf. Fig. 2. The cells are placed in an oven in a controlled atmosphere of hydrogen moistened with 3% water at 25 °C. The impedance of the cells is measured by impedance spectroscopy at open voltage ($\eta=0$) at 850°C and 1000°C. Such a measuring is illustrated in Fig. 3.

A curve adjustment of the impedance measurements were performed by means of the program "Equivalent Circuit", an equivalent circuit being adjusted to the test data. The equivalent circuit includes capacitances C, inductances L, resistances R and constant phase elements Q.

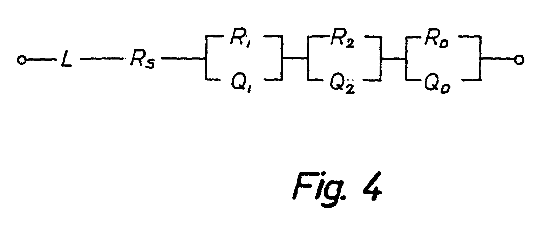

The equivalent circuit used for the curve adjustment is shown in Fig. 4, where L is an induction also covering phase errors in the measuring equipment at high frequencies, $R_s$ is a serial resistance including a resistance substantially in the electrolyte, $R_1$ & $Q_1$ and $R_2$ & $Q_2$ represent limiting steps in the electrode reaction, whereas $R_D$ & $Q_D$ represents the gas phase diffusion resistance outside the anode structure. The reaction resistance $R_p$ is then calculated for the electrode as

$$R_p = (R_1 + R_2) \cdot A \cdot 1/2$$

where A is the area of the cell, and the factor ½ is caused by both electrodes on the cell being part of the measuring.

Table 1A

| Type of element | The composition of the first layer, metal atom% | Sintering and thickness | The composition of the following layer, metal atom% | Sintering and thickness | $R_P$, 850°C, $m\Omega cm^2$ | $R_P$, 1000°C, $m\Omega cm^2$ |
|---|---|---|---|---|---|---|
| Reference element | 67.5% NiO, 32.5% 8YSZ | 1300°C/2h 15μm | 67.5% NiO, 32.5% 8YSZ | 2 x 1300°C/2h 35μm | **105** | 79 |
| Impregnation after sintering | 65.8% NiO, 31.8% 8YSZ, **2.4 % $MnO_2$ ¤** | 1300°C/2h 15μm | 65.8% NiO, 31.8% 8YSZ, **2.4% $MnO_2$ ¤** | 2 x 1300°C/2h 35μm | 86 | 20 |
| Additive on the electrolyte sur-face | 64.4% NiO, 31.0% 8YSZ, **4.6% $MnO_2$ &** | 1300°C/2h 10μm | 67.5% NiO, 32.5% 8YSZ | 2 x 1300°C/2h 37μm | 74 | 43 |
| Additive in anode layer | 67.5% NiO, 32.5% 8YSZ **2.1% $MnO_2$#** | 1300°C/2h 5 to 6 μm | 67.5% NiO, 32.5% 8YSZ | 2 x 1300°C/2h 50μm | 59 | 66 |

¤ Mn added as solution of $Mn(Ac)_2 \cdot 4H_2O$ by impregnation of the sintered electrode structure.

& Mn added as solution of $Mn(Ac)_2 \cdot 4H_2O$ painted on electrolyte prior to spraying of first anode layer.

# Mn added as solution of $Mn(NO_3)_2 \cdot 4H_2O$ in the particle solution forming the first electrode layer.

## Improved conductivity of Ni/doped $ZrO_2$ based electrode

The conductivity in the plane of the electrode can be a limiting factor for the conductivity of said electrode

6

when the distance between contact points to the surrounding contacting structure exceeds the thickness of the electrode structure. The latter is often the case where gas access to the electrode is required. It is typically necessary to apply a nickel based layer onto an electrochemical cell with a nickel based active electrode of a poor thickness, i.e. below 20 $\mu$m, in order to ensure a sufficient inplane conductivity.

Such a composite electrode layer can be applied by way of spraying of a particle suspension as stated above. Other techniques are also suitable. After the application of one or more particle suspensions, the structure can be subjected to a sintering, if necessary.

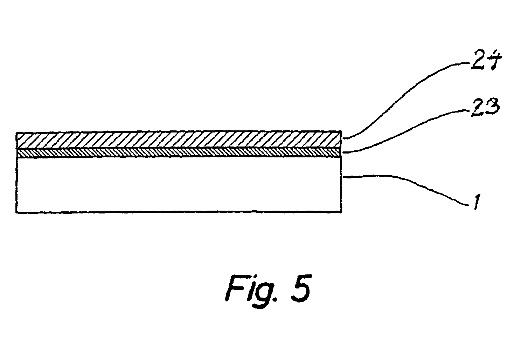

In order to document the positive effect of $MnO_x'$ on the inplane conductivity of a composite nickel based electrode layer, two Ni/8YSZ ($ZrO_2$ doped with 8 mol% $Y_2O_3$) electrode layers are produced with and without $MnO_x$. The comparison appears from Table 1B. The electrode layers are sprayed onto 10 to 20 $\mu$m thin Ni/8YSZ anodes on 8YSZ electrolytes, cf. Fig. 5 showing the electrolyte 1, onto which an active electrode layer 23 and an electrode layer 24 have been applied.

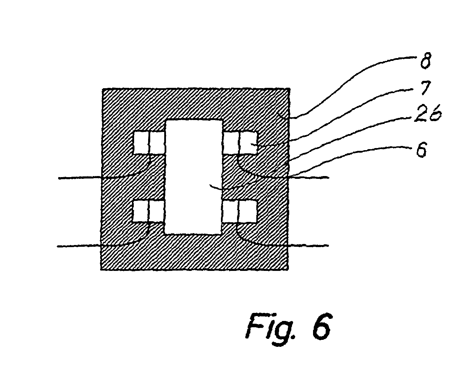

The produced semi-cells are fragmented into elements of an area of approximately 1 to 2 $cm^2$, and four Pt point connections are established by means of weight-loaded Pt wires 6 wound about aluminium pipes 7, cf. Fig. 6 showing the weight load 26. The element is placed in an oven in an atmosphere of 9% hydrogen in nitrogen with 3% water, and heated to 1000$°$C. The conductivity of the electrode layer 8 $\sigma$(at 1000$°$C) is determined by way of a square four-point measuring (Van der Pauw) technique, which is calibrated on a metal element having a well-known conductivity.

After the above characterization the elements are cooled under reducing conditions, and the conductivity thereof at room temperature $\sigma$(20$°$C) is determined by way of a conventional linear four-point conductivity measuring.

Table 1B

| Type of element | Composition of the electrode layer, metal atom% | 8YSZ Particle size | Sintering | $\sigma(20°C)$, S/cm | $\sigma(1000°C)$, S/cm |
|---|---|---|---|---|---|
| Reference element | 67.5% NiO, 32.5% 8YSZ | 20% 0.3 to 0.4 μm, 80% 10 to 50 μm | 1250°C/2h | 470 | 50 |
| Test element | 64.4% NiO, 31.9% 8YSZ, 4.1% $MnO_2$# | 20% 0.3 to 0.4 μm, 80% 10 to 50 μm | 1250°C/2h | 1060 | 150 |
| Reference element | 67.5% NiO, 32.5% 8YSZ | 40% 0.3 to 0.4 μm, 60% 10 to 50 μm | 1250°C/2h | 14 | 2.5 |
| Test element | 64.4% NiO, 31.9% 8YSZ, 4.1% $MnO_2$# | 40% 0.3 to 0.4 μm, 60% 10 to 50 μm | 1250°C/2h | 390 | 60 |

\# Added as $Mn(NO_3)_2 \cdot 4H_2O$

Catalytic activity of Ni-based electrode

For nickel based electrodes and catalytic elements, where an electronic conductivity is to be maintained while the catalytic activity of nickel is to be limited, it is not possible to reduce the amount of nickel much below 30% in a porous structure.

8

Instead the catalytic activity of present nickel can be reduced. Below it has been documented that this reduction of catalytic activity for nickel can be provided by adding $MnO_x$. A fine-grained Ni/8YSZ ($ZrO_2$ doped with 8 mol% $Y_2O_3$) based structure is produced by mixing NiO, 8YSZ and a water-based binder with water to a viscous mass and by rolling this mass into a plate of a thickness of 1 mm and sintering said plate at 1350°C/8 hours. A number of such plates has been produced by admixing various amounts of $Mn(NO_3)_2 \cdot 4H_2O$. The tested compositions appear from Table 1C. The sintered plates are crushed in a mortar, and by way of screening a fraction of 0.4 to 1.0 mm has been removed and tested as catalyst for steam reforming of methane.

The catalyst is admixed quartz sand in the ratio 1:5. This mixture is placed on a bed of pure quartz sand in a U-shaped quartz pipe ($\varnothing_i$=5mm), through which a gas mixture is fed to a gas chromatograph, cf. Fig. 7. The gas mixture is established by a mixing of pure gases through thermal mass flow meters. Subsequently the gas is moistened with water in a bobble bottle 9 on a thermostatically controlled oil bath 10. Thereafter the gas is kept at an increased temperature until it has passed the catalyst 11 followed by a quartz ring 27 so as to prevent condensation. The quartz pipe 12 is placed in an oven 13, and the sample is heated to 900°C in a flow of 9% hydrogen in nitrogen. The sample is stabilised for 24 hours in pure hydrogen with approximately 3% water (saturation at 25°C) and then cooled to 850°C. The gas in the pipe is replaced by 67% methane + 33% water (saturation at 88°C). When the gas has passed the catalyst 11, the majority of the water is condensed out into a cold trap 15 (8°C), and the composition of the remaining amount of gas is tested in a gas chromatograph 16. The gas chromatograph 16 (HP 5890 Series II) is equipped with a 6 foot Porapak Q column, a detector measuring thermal capacity (TCD), as well as an HP3396A integrator. The reformed portion of the methane gas $R_{CH4}$ is calculated on the basis of a carbon balance in the gas leaving the catalyst 11,

$$R_{CH4}=(C_{CO2}+ C_{CO})/(C_{CO2}+C_{CO}+C_{CH4})$$

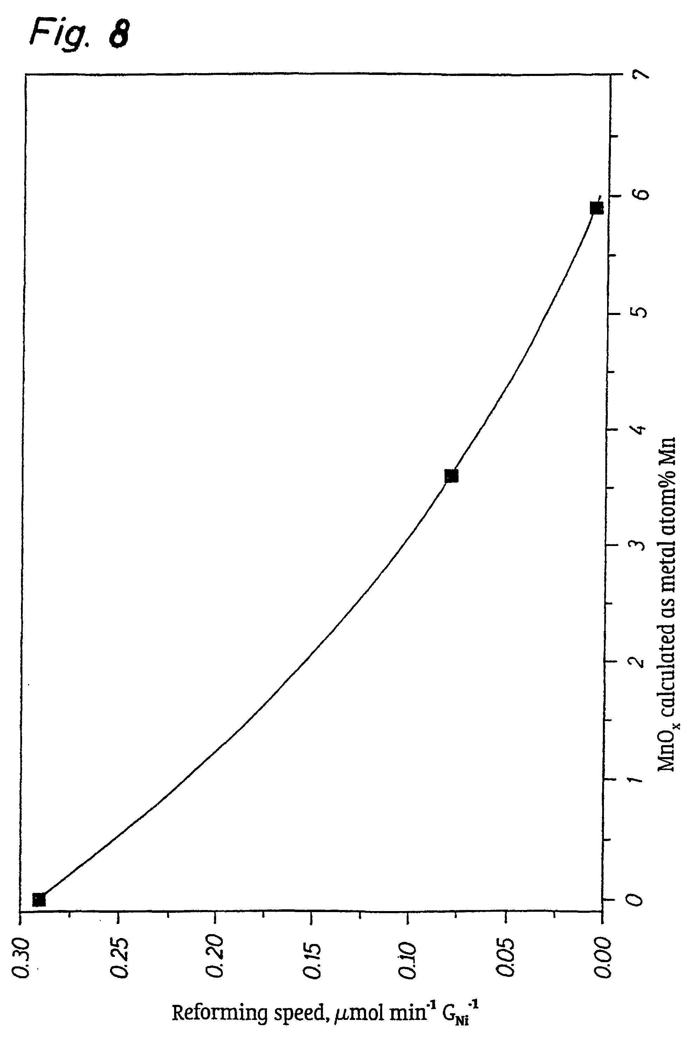

where $C_x$ indicates the concentration of methane ($C_{CH4}$), carbon dioxide ($C_{CO2}$) and carbon monooxide ($C_{CO}$), respectively. $R_{CH4}$ is standardized relative to the weighed amount of Ni/8YSZ catalyst and the composition and speed of the input gas in the pipe surrounding the catalyst 11, whereafter the reforming speed in $\mu molmin^{-1}g^{-1}$ are found. The calculated values based on the measurements are indicated in Fig. 8.

Table 1 C

| Type of element | Composition of the catalyst, metal atom% | Sintering |
|---|---|---|
| Reference element | 67.4% NiO, 32.6% 8YSZ | 1350°C/8h |
| Test element | 65.0% NiO, 31.4% 8YSZ, 3.6% $MnO_2$# | 1350°C/8h |
| Test element | 63.5% NiO, 30.6% 8YSZ, 5.9% $MnO_2$# | 1350°C/8h |
| # Added as $Mn(NO_3)_2 \cdot 4H_2O$ | | |

Demonstration of electrochemical cell

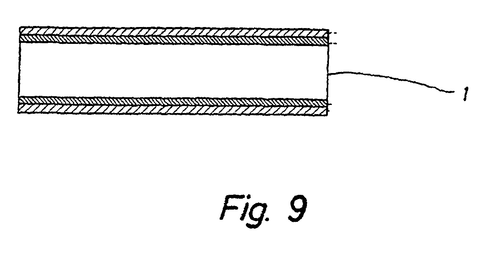

For the power production of a fuel gas and air, an electrochemical cell, cf. Fig. 9, with $MnO_x$ is produced in the following manner:

- A compact 8YSZ ($ZrO_2$ doped with 8 mol % $Y_2O_3$) electrolyte of a thickness of 170μm is produced by sintering at 1350°C after film casting.

- A particle suspension containing 55.8 w/o of 8YSZ and 44.2 w/o of NiO is sprayed onto one electrolyte side, viz. the anode side, and sintered at 1300°C/2h, which results in a porous layer of a thickness of approximately 15μm.

- A second particle suspension containing 42.6 w/o of 8YSZ and 53.6 w/o of NiO and 3.8 w/o of $MnO_2$ (3.9 metal atom%) added in form of $Mn(NO_3)_2 \cdot 4H_2O$ is sprayed twice onto the initially applied layer on the anode side and sintered after each spraying at 1200°C/2h, whereafter it forms a porous layer of a thickness of approximately 35 μm.

- A third particle suspension containing 40 w/o of 3YSZ and 60 w/o of $(La_{0.85}Sr_{0.15})_{0.90}MnO_3$ is sprayed onto the opposite side of the electrolyte, viz. the cathode side, and sintered at 1100°C/2h, whereafter it forms a porous layer of a thickness of approximately 10 μm.

- A fourth particle suspension containing $(La_{0.85}SrO_{0.15})_{0.90}Mn_{1.10}O_3$ is sprayed onto the active cathode in two layers, each layer being sintered at 1100°C/2h, whereafter it forms a porous layer of a thickness of approximately 30 μm.

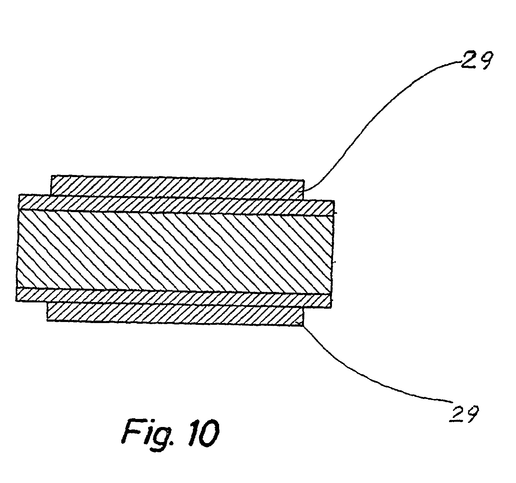

The efficiency of the cell is characterized as follows, cf. Fig. 10.

- The anode side is provided with a contact layer in form of an NiO suspension which is sprayed thereon in a layer of a thickness of approximately 50 μm and which is not sintered.

- The cathode side is provided with a contact layer in form of a 75 μm thick film cast layer, which is applied by way of softening in ethanole, and which is not sintered.

- Circular, woven Pt grids 29 of an area of 10.0 cm$^2$ are symmetrically mounted on both electrode surfaces.

As a result the cell is efficiently contacted across the entire electrode surface through the platinum grids 29.

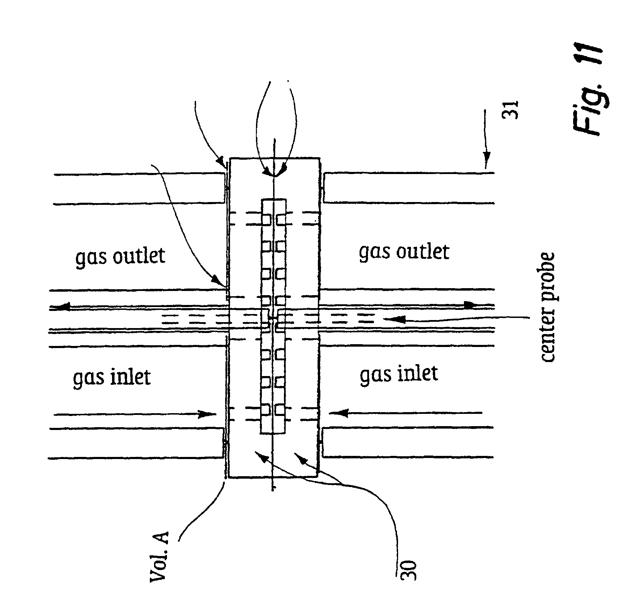

The cell with the contacting is mounted between two plane gas distribution plates 30 with openings and ribs which ensure gas access to the electrodes. The cell and the contacting and the gas distribution plates 30 are mounted between two sets of aluminium pipes 31 in an oven, cf. Fig. 11. The cell is heated to a temperature of 1050°C. The temperature is measured by means of thermal elements arranged 1 mm above the centre of the cell.

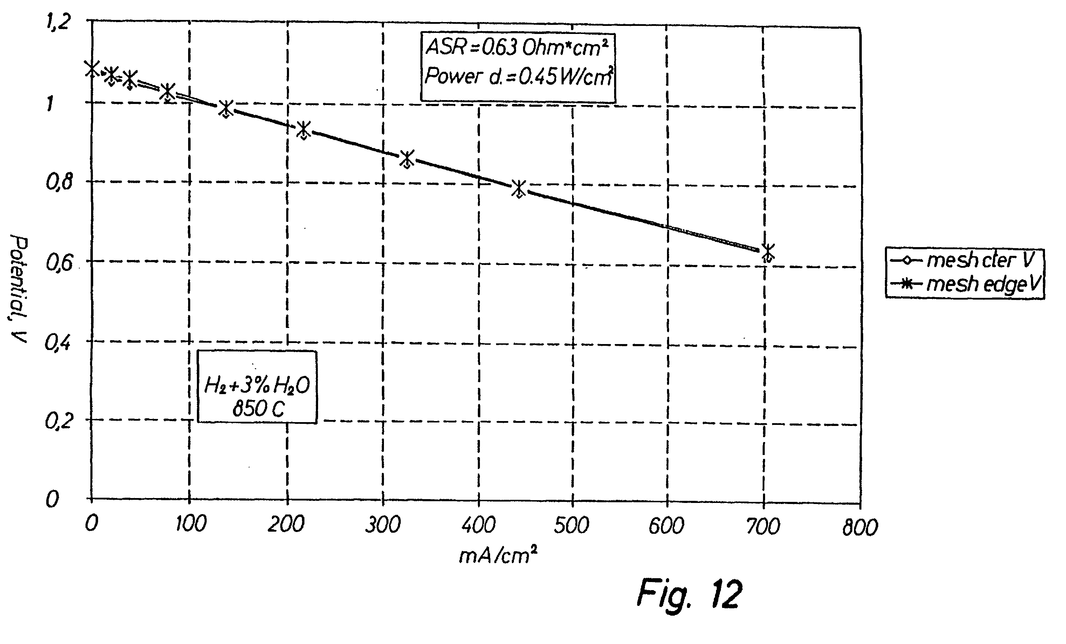

The cathode side is fed with air, whereas the anode side is fed with hydrogen moistened with 1.2% water at 11°C. The gases are fed through the outer pipes and removed through the inner pipes. The voltage across the cell can be measured at the edge $V_K$ and the centre $V_C$ of the electrodes through wires without current. Current is collected from the cell through the platinum grids 29 and separate conduits by loading with external resistances, and a current-voltage curve, cf. Fig. 12, can be taken. The negative inclination of the current-voltage curve presents the DC resistance of the cell, here approximately 0.63 $\Omega$cm$^2$ estimated conservatively across the entire measured interval.

The DC resistance of the cell includes a) electrolyte resistance (estimated to be 0.35 $\Omega$cm$^2$ for 170 μm 8YSZ at 850°C, b) the reaction resistance of the cathode (estimated to 0.20 $\Omega$cm$^2$ as the optimal measuring for this type of cathode), c) the reaction resistance of the anode, and d) the resistance in the contacting of the cell. The measuring d) cannot be measured separated, and it is here assumed to be 0.00 $\Omega$cm$^2$.

Subsequently, maximum 0.08$\Omega$cm$^2$ of the DC resistance of the cell remains, which can be ascribed to the Ni-based anode, which has been admixed MnO$_x$.

Reference cells are produced in the same manner apart from 1), MnO$_x$ has not been added, and 2) the two outermost anode layers have been sintered at 1300°C/2h in order to ensure the conductivity in stead of only 1200°C/2h, and 3) the cathode has been sintered at 1300°C. These reference cells provide in connection with an identical test at best a DC resistance of 1.00 $\Omega$ cm$^2$. It is possible to derive a reaction resistance of the anode of 0.25 $\Omega$cm$^2$ from the latter in the same manner when it comes to Ni-based anodes without the addition of MnO$_x$.

**Claims**

1. An electrochemical cell, such as an SOFC cell, including a nickel based electrode structure, such as for instance in form of an Ni/YSZ electrode, to which Mn has been added, **characterized in that** the added amount of Mn to the active zone of the electrode extending less than 20 μm from the electrolyte represents 0.5 to 5 metal atom%, preferably 1 to 4 metal atom%, in particular 2 to 3 metal atom%.

2. An electrochemical cell as claimed in claim 1, **characterized in that** the added amount of Mn in the part of the electrode spaced more than 20 μm from the electrolyte represents 0.5 to 10 metal atom%, preferably I to 6 metal atom%, in particular 4 to 5 metal atom%.

**Patentansprüche**

1. Elektrochemische Zelle, beispielsweise eine SOFC-Zelle, die eine auf Nickel basierende Elektrodenstruktur, beispielsweise in Form einer Ni/YSZ-Elektrode beinhaltet, zu welcher Mn hinzugefügt worden ist, **dadurch gekennzeichnet,** **dass** die in die aktive Zone der Elektrode, die sich weniger als 20 μm von dem Elektrolyt aus erstreckt, hinzugefügte Menge an Mn 0,5 bis 5% der Metallatome, vorzugsweise 1 bis 4% der Metallatome, insbesondere 2 bis 3% der Metallatome darstellt.

**2.** Elektrochemische Zelle nach Anspruch 1,
**dadurch gekennzeichnet,**
**dass** die hinzugefügte Menge an Mn in dem Teil der Elektrode, der mehr als 20 $\mu$m von dem Elektrolyt beabstandet ist, 0,5 bis 10% der Metallatome, vorzugsweise 1 bis 6% der Metallatome, insbesondere 4 bis 5% der Metallatome darstellt.

**Revendications**

**1.** Cellule électrochimique, telle qu'une pile SOFC, comprenant une structure d'électrode à base de nickel, comme par exemple sous la forme d'une électrode Ni/YSZ, à laquelle Mn a été ajouté, **caractérisée en ce que** la quantité ajoutée de Mn à la zone active de l'électrode s'étendant à moins de 20 $\mu$m de l'électrolyte représente 0,5 à 5 atome % de métal, de préférence 1 à 4 atome % de métal, notamment 2 à 3 atome % de métal.

**2.** Cellule électrochimique selon la revendication 1, **caractérisée en ce que** la quantité ajoutée de Mn dans la partie de l'électrode éloignée de plus de 20 $\mu$m de l'électrolyte représente 0,5 à 10 atome % de métal , de préférence 1 à 6 atome % de métal, notamment 4 à 5 atome % de métal.

Fig. 1

Fig. 2

in hydrogen + 3% water at 1000°C

Fig. 3

EP 1 135 820 B1

Fig. 4

Fig. 5

Fig. 6

GAS MIXTURE

*Fig. 7*

## Fig. 8

Reforming speed, $\mu$mol min$^{-1}$ G$_{Ni}$$^{-1}$

MnO$_x$ calculated as metal atom% Mn

Fig. 9

Fig. 10

Fig. 11

gas outlet

gas outlet

gas inlet

gas inlet

center probe

Vol. A

30

31

Fig. 12